# EUROPEAN PATENT SPECIFICATION

(11) **EP 3 142 889 B1**
(45) Date of publication and mention of the grant of the patent: **08.04.2020**
(21) Application number: 15722483.3
(22) Date of filing: 01.05.2015
(51) Int. Cl.: B60L 5/36, B60L 5/42, B60L 1/00, B60L 3/00, B60L 53/14, B60L 53/16, B60L 53/30, B60L 53/35, B60M 1/36, B60L 53/10, B60L 58/12

(54) **VEHICLE CHARGING ARRANGEMENT**
ANORDNUNG ZUR FAHRZEUGAUFLADUNG
AGENCEMENT DE CHARGE DE VÉHICULE

(30) Priority: 14.05.2014 GB 201408560
(43) Date of publication of application: 22.03.2017
(73) Proprietor: Furrer + Frey AG, 3005 Bern (CH)
(72) Inventor: BEDELL, Roger, E-18190 Granada (ES); SPANNAUS, Thomas, CH-3000 Bern 6 (CH)
(74) Representative: Noble, Frederick
(86) International application number: PCT/EP2015/059627
(87) International publication number: WO 2015/173036

(56) References cited:
- WO-A1-00/66388
- WO-A2-2010/134763
- WO-A2-2011/079215
- DE-A1- 3 101 655
- DE-A1-102012 202 955
- GB-A- 2 256 178
- JP-A- 2006 081 310
- JP-A- 2010 166 706

## Description

The present invention relates to a vehicle charging arrangement, and in particular to a vehicle charging arrangement suitable for charging electric buses and trucks.

### BACKGROUND TO THE INVENTION

Electric vehicles are becoming increasingly practical, and electric buses in particular are beginning to be used on public service routes in cities throughout the world. Compared with traditional diesel-powered buses, electric buses have advantages in terms of reduced air pollution and quieter operation.

Electric buses generally fall into two types. "Big battery" buses have large-capacity batteries, which are charged for a number of hours (for example, overnight) to provide enough range for a reasonably long journey. "Fast-charging" buses, on the other hand, have lower-capacity batteries which are designed to be charged very rapidly, to provide enough range for a shorter journey. The smaller batteries mean reduced overall weight of the vehicle and therefore more efficient operation. The fast-charging design is particularly suitable for public-service city buses, where the route may be typically less than around 5 to 10 miles long. Buses can be charged at one end of the route, to provide enough range to run the service to the other end of the route and then back again to be recharged. Charging takes a relatively short period of time, and can take place for example during a driver changeover period.

Fast-charging buses need charging stations which are robust, reliable and safe for use in public areas. Because the buses need charging relatively frequently, multiple charging stations may be required in a city or other operating area, and cost is therefore a particularly important factor. It is also important that charging stations are aesthetically acceptable in the streetscape.

A design for fast-charging stations are disclosed in the applicant's granted patent EP2504190. The disclosed charging arrangement provides for a very good side-to-side and front-to-back docking tolerance with the charging station, but the equipment which must be mounted to the roof of the vehicle is bulky and heavy.

Economically, electric vehicle charging stations are more cost-effective if they are fully utilised by a fleet of vehicles. Clearly, a charging station which is only used one or two times each day when a bus is at the end of its route does not represent good value. Some non-passenger vehicles, for example refuse collection trucks and some delivery vehicles, are also suitable for fast-charging electric operation because they have short, fixed routes. This would result in better utilisation of the charging stations and a more economic system overall. However, it has proved difficult to fit the necessary charging hardware to the roof of such vehicles, due to the more limited space as compared with buses.

GB2256178A discloses a public service vehicle transport system including a battery-powered vehicle with a pantograph, and a charging pylon with arms that are deployable when the vehicle approaches.

DE3101655A1 discloses a power supply system for charging a battery-powered non-rail-bound vehicle when the vehicle is at a stop.

WO2010/134763A2 discloses a battery-charging apparatus for an electric vehicle, with electrodes on a charging block and corresponding electrodes on a docking block in the vehicle.

DE102012202955A1 discloses a charging system for a stationary electric vehicle at a charging station. The vehicle has an articulated arm, and the overhead charging station has different electrical contacts to provide different electrical phases when charging.

WO2011/079215A2 discloses systems and methods for charging a vehicle via a charging station.

JP2010166706A discloses a charging station for charging a rechargeable vehicle which is stopped in the required position.

It is an object of the present invention to provide a charging arrangement for an electric vehicle which can be fitted to trucks with a small roof area, which puts a reduced amount of weight and cost on the vehicle, and in which the charging stations are cheaper to fabricate and easier to design with different appearances to lower the visual impact in cities. It is a further object of the invention to provide a vehicle charging arrangement with enhanced safety.

### SUMMARY OF THE INVENTION

According to the present invention, there is provided a charging arrangement according to claim 1. Optional features are provided in the dependent claims.

Because the system does not rely on moving parts on the charge receiving connector, the cost of the charge receiving conductor is reduced, and it also adds less weight to the vehicle as compared with pantographs and other moving charge receiving connectors. With all the charge receiving conductors in one straight line, the charge receiving connector has a small footprint and is suitable for fitting to, for example, garbage trucks and delivery trucks, as well as buses.

The charge receiving connector may be secured to the roof of the vehicle substantially at a fixed height from the roof of the vehicle. In some embodiments, the charge receiving connector may be able to move vertically, but the extent of any such movement will be small compared with the movement in the charging connector. Preferably, any such vertical movement is less than 30cm, most preferably less than 20cm.

Each charging conductor on the charging gantry may be disposed substantially parallel with each other and side-by-side. In use, the vehicle may be parked with the in-line charge receiving conductors running substantially perpendicular to the parallel charging conductors.

A cover may be included for covering the charge receiving connector. A cover prevents dirt and weather from damaging the charge receiving connector, while the vehicle is not being charged. Also, the cover acts as an insulating barrier which prevents persons from coming into contact with the charge receiving conductors. Although the charge receiving connector will usually be mounted on top of a vehicle, where it is difficult to access, there is always a possibility that a person may come into contact with the connector, especially in a road accident where the vehicle may overturn. The cover may be formed in two elongate parts, the parts folding outwardly to either side of the row of conductors in order to open the cover, and the parts folding inwardly, towards one another, to close the cover and protect the conductors.

The charge receiving conductors may be provided on tilting mounts. Ideally, each charge receiving conductor is provided on an independent tilting mount. The mounts may allow lateral tilting of each charge receiving conductor, in a direction substantially perpendicular to the elongate extent of the charge receiving conductors.

Tilting mounts allow the charge receiving conductors to tilt in order to compensate for any unevenness or slope in the ground on which the vehicle is parked. As the charging conductors are lowered onto the charge receiving conductors, the charge receiving conductors tilt to ensure a good quality electrical connection. Ideally, each charge receiving conductor includes a substantially planar conductive contact surface, and this surface tilts with the conductor. The greatest possible contact area between the charging conductors and the charge receiving conductors is therefore maintained, ensuring safe and efficient energy transfer.

In some embodiments, both the charging conductors and the charge receiving conductors may be provided on tilting mounts, to ensure the best possible contact for charging.

In some embodiments, only two of the conductors (the positive and negative "power" conductors) may be provided on tilting mounts, as described above. These are the conductors for which a high quality contact is most essential. However, it is preferred for the third conductor (earth) to be a tilting conductor as well. In some embodiments, four conductors are provided - two power conductors, earth, and a pilot conductor, and preferably all four conductors are provided on tilting mounts. Also, in some embodiments only the power conductors may have a substantially planar conductive contact surface. The pilot and earth contacts can be simply rod-shaped conductors, with a single line or point of contact with the overhead charging conductor.

Rod-shaped conductors (or, in the general case, conductors which have a curved contact surface) can be made at very low cost, and ensure that a good contact is made regardless of any tilt about the elongate axis of the conductor. However, this is at the cost of reduced contact area. Tilting conductors with a planar contact surface provide for a similar tolerance to tilting as conductors with a curved contact surface, and also a greater contact area.

Preferably, the tilting mounts provide for tilting of up to around 15° in either direction, although it is envisaged that a tilt of as little as 4° in either direction may provide for a practically useful additional tolerance.

Insulating spacers may be provided on ends of the charge receiving conductors. Preferably, the insulating spacers are triangular. Each triangular spacer may have a first side parallel with and coincident with an end of its respective charge receiving conductor, a second side perpendicular to the first side, and a third side. The third side of each triangular spacer may be substantially parallel with the third side of an adjacent triangular spacer. In other words, adjacent triangular spacers substantially tessellate to form a two-part rectangular spacer between two adjacent charge receiving conductors. This arrangement is effective to prevent large debris from falling between and underneath the conductors. In that respect, the triangular spacers at either end of any given charge receiving conductor may have third sides substantially facing away from each other, towards opposing lateral sides of the row of charge receiving conductors.

A further advantage of the triangular spacers is that they prevent the charging conductors from dropping between the charge receiving members and getting caught, which could lead to significant and expensive damage.

The charge receiving connector may be installed on the roof of the vehicle, with the elongate axis of the charge receiving connector being disposed substantially parallel with an end of the vehicle. In other words, the charge receiving connector may be installed across the vehicle, from one side to the other. The charge receiving connector has a small footprint and requires only a small amount of free roof-space to install. It is therefore suitable for, for example, trucks as well as buses. Even on buses, the small footprint is advantageous since it leaves more room for air conditioning units and other roof-mounted plant. Electric buses often have roof-mounted batteries and it can therefore be difficult to locate pantographs or other moving charge receiving connector equipment. The single transverse bar of the present invention can be located practically anywhere on a vehicle roof, between the front end and the back end, and there is very low visual impact on the bus itself..

The flexibility to install the charge receiving connector on various different types of vehicles means that the same charging gantry may be used for multiple vehicles. This increases the overall utilisation of expensive charging equipment, making installation of charging stations an economically more attractive proposition.

The charging gantry includes at least four vertically-movable charging conductors. The charging conductors on the gantry may be elongate and disposed side-by-side and parallel with each other.

A fourth charging conductor is included. The four charging conductors include two "power" conductors, an earth conductor and a pilot conductor.

Preferably, the charging gantry includes a rigid support structure having a substantially vertical stanchion and a substantially horizontal overhead section. The conductors may be movably mounted to the underside of the overhead section by, for example, pantographs. All the moving parts and control electronics may be housed in the overhead section. This allows for flexibility in producing vertical stanchion sections of various different designs to blend in with the streetscape in different cities, because any shape, design or materials can be used provided that the stanchion can safely support the overhead section. The overhead section can be of a standard design, and used with any of various different stanchion sections.

Where each charging conductor on the charging gantry is independently movable, the charging conductors can be lowered to differing extents in order to ensure good contact with the charge receiving conductors. The charging conductors may move down onto the charge receiving conductors by gravity, under their own weight. When the charging conductors need to be raised, a motor mounted in the overhead section of the gantry can pull the conductors back to the raised position. In some embodiments, the motor may control descent as well as ascent, and in particular speed control may be provided to reduce the speed of the charging conductors as they come close to the charge receiving conductors on the vehicle. Ideally, the driving arrangement for the charging conductors is failsafe, for example, spring-loaded so that the charging conductors are raised automatically if power is lost or the motor fails.

Where the charging conductors in the raised position are vertically offset, they will contact the charge receiving conductors in the correct order according to the IEC61851 standard, the earth conductor first, then positive and negative power conductors, then finally the pilot conductor.

The overall charging arrangement, with a movable charging connector on the charging gantry and a compact, in-line charge receiving connector on the vehicle roof, is advantageous because it moves the mechanical complexity from the vehicle onto the charging gantry. This results in lower cost per vehicle and greater reliability. It also allows the charging arrangement to be used with vehicles having limited roof space, for example trucks as well as buses.

Wireless communications means may be provided between the vehicle and the charging gantry. In particular, the communication means may be a two-step communication system. An RFID tag on the vehicle and an RFID reader on the gantry serve initially to ensure that the vehicle and gantry are in close proximity. In some embodiments, the RFID system may also provide an authorization mechanism to ensure that the vehicle is allowed to use the gantry. Some multi-user charging stations may need to identify the user for billing purposes. Also, an RFID tag mounted at a known position on the vehicle may be used as a positioning aid to assist the driver of the vehicle in parking in the correct location for the charging gantry to be able to engage with the vehicle.

The RFID system may be used to "bootstrap" a second-stage, higher-bandwidth connection, for example a WiFi connection. In other words, the RFID tag may contain information required to set up the WiFi connection. Bootstrapping a WiFi connection in this way allows the time-consuming enquiry process to find nearby networks to be bypassed, and a WiFi connection to be established extremely quickly. This allows bi-directional communication between vehicle and charging station from the point where the vehicle is in proximity, throughout the charging process, until charging is complete and the charger has been disconnected.

It is also envisaged that a WiFi signal can be used to detect proximity with sufficient accuracy. In such embodiments, a directional WiFi antenna is used, and the transmission power is controlled to ensure that a connection can only be made when the vehicle is close enough to the charger for charging to take place.

The communication means between the vehicle and the gantry may be used to control the opening and closing of covers, if they are provided over the charge receiving connector. The communication means may also be used for control of the lowering and raising of the charging connector. In particular, a termination signal can be sent from the gantry to the vehicle once the charging conductors have been lifted safely clear of the vehicle, for example above 4.5 metres from the ground. The termination signal clears the vehicle to drive away from the charging station. This can be by means of a simple visual or audible indication to the driver, or alternatively the vehicle can be electronically inhibited from starting until the termination signal is received.

### BRIEF DESCRIPTION OF THE DRAWINGS

For a better understanding of the present invention, and to show more clearly how it may be carried into effect, reference will now be made by way of example only to the accompanying drawings, in which:
Figure 1 shows a perspective view of a charge receiving connector for a vehicle, with the cover in the open position;
Figure 2 shows a perspective view of the charge receiving connector of Figure 1, with the cover in the closed position;
Figure 3 shows a perspective view of a vehicle charging arrangement, including a charge receiving connector mounted on a vehicle and a charging gantry, the charging gantry having four charging conductors in a raised position;
Figure 4 shows a perspective view of the vehicle charging arrangement of Figure 3, with the charging conductors in a lowered position;
Figure 5 shows a perspective view of an alternative charging connector; and
Figure 6 shows a perspective view of an alternative embodiment of a vehicle charging arrangement.

### DESCRIPTION OF PREFERRED EMBODIMENTS

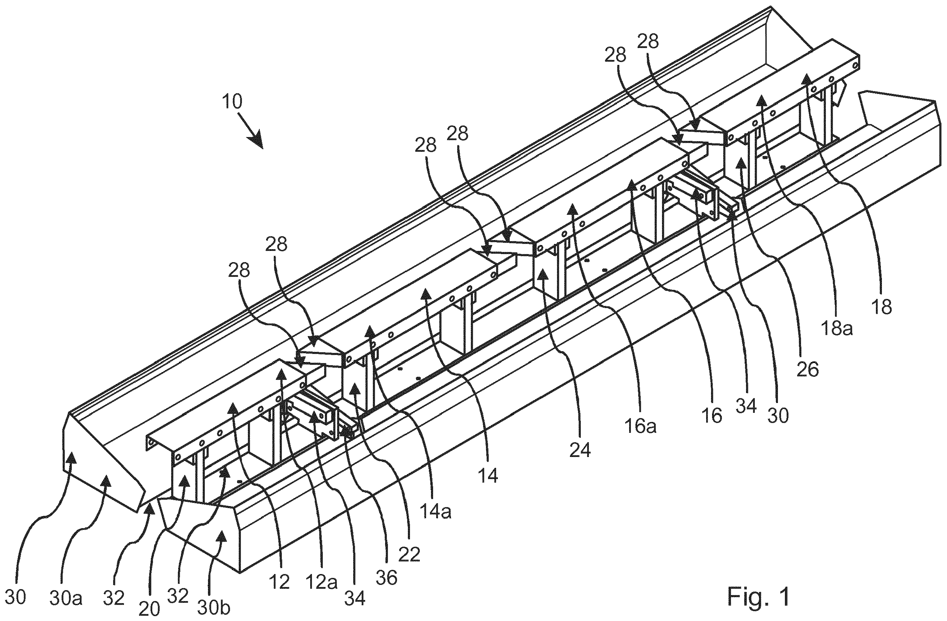

Referring firstly to Figure 1, a charge receiving connector for a vehicle is indicated generally at 10. The charge receiving connector includes four charge receiving conductors 12, 14, 16, 18. The charge receiving connectors are substantially in the form of cuboids and are elongate, each having a longitudinal axis. The longitudinal axes of the elongate charge receiving conductors are disposed along the same line.

Each charge receiving conductor has a substantially planar contact face 12a, 14a, 16a, 18a. The contact faces are each substantially rectangular. On a side of each charge receiving conductor which opposes the contact face 12a, 14a, 16a, 18a, each conductor is fixed onto pivoting mounts 20, 22, 24, 26. Each pivoting mount comprises a pair of upright stands for securing to a vehicle, and pair of clamp sections for securing to the conductor. The clamp sections are secured to the conductor on the side opposing the contact face, each clamp section being disposed near an end of a conductor. The clamp sections are fixed to the upright stands by, for example, a screw, rivet or pin, so that the clamp sections can pivot with respect to the stands, and thus the charge receiving conductors 12, 14, 16, 18 can pivot slightly on the vehicle.

Where two ends of charge receiving conductors are placed adjacent to each other, that is, on both ends of the two inner charge receiving conductors 14, 16 and on one end of each of the outer charge receiving conductors 12, 18, insulating spacers 28 are provided. The insulating spacers are triangular in shape, having three sides. The first side is coincident with an end of its associated charge receiving conductor, the second side is perpendicular to the first side, and the third side completes the triangle. The insulating spacers insulate the conductors from each other, whilst preventing debris from falling between the conductors and also preventing the charging conductors from becoming caught in the charge receiving connector.

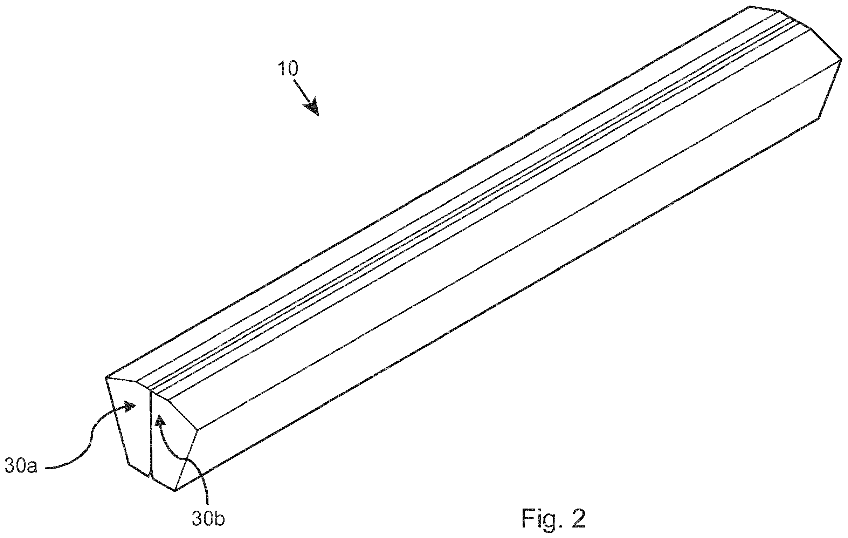

A movable cover 30 is provided in two halves 30a, 30b. Each half of the cover is substantially identical, and the cover is adapted to open outwardly and close inwardly, as illustrated in Figures 1 and 2. Each half of the cover has a pivoting edge which is hinged to the roof of the vehicle, and the cover can be opened by operating arms 36 which are pushed outwardly by an actuator 34.

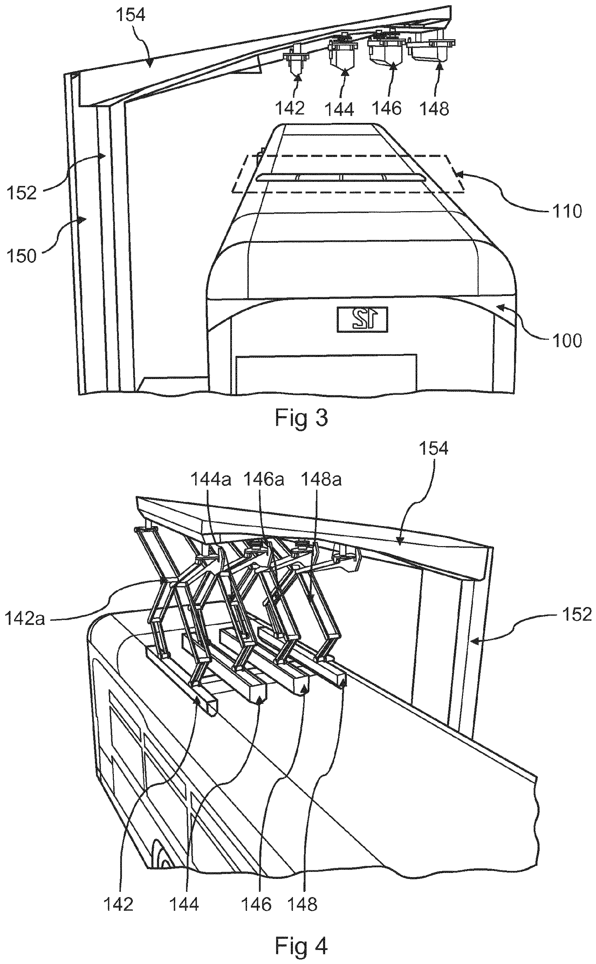

Referring now to Figures 3 and 4, an alternative embodiment of a charge receiving connector 110 is shown, mounted to the roof of a vehicle 100. The second embodiment does not have a cover, but in other respects it is materially the same as the first embodiment 10, and in particular includes four charge receiving conductors disposed along one line.

A charging gantry 150 is shown in use with the vehicle 100, and includes a substantially upright stanchion section 152, and a substantially horizontal overhead section 154. The vertical stanchion section is provided for support only, and in some embodiments may include conduit or other features allowing wiring to be run down the stanchion. However, the stanchion includes no moving parts and therefore various different designs of stanchion can be used with the same horizontal overhead section 154.

The horizontal overhead section 154 supports four conductors 142, 144, 146, 148, each of which is independently movable on an associated pantograph 142a, 144a, 146a, 148a. The conductors are movable between a raised position as shown in Figure 3, and a lowered position as shown in Figure 4. In the lowered position, the charging conductors 142, 144, 146, 148 contact the contact surfaces 12a, 14a, 16a, 18a of the charge receiving connector 10. Because the conductors are independently movable, a reasonably predictable contact force between the each charging conductor and its respective charge receiving conductor can be relied upon. The pantographs are raised and lowered using a motor, and software speed control is used to reduce the speed and reduce the impact force as the charging conductor meets the charge receiving conductor. When charging, the contact force is between 200N and 700N.

As seen best in Figure 3, the charging conductors 142, 144, 146, 148 are vertically offset from each other in the raised position. From the left of the figure, charging conductor 142 is the lowest down, followed by charging conductors 144, 146, 148 in that order. In this embodiment, charging conductor 142 is an earth connection, conductor 144 is a negative power connection, conductor 146 is a positive power connection, and conductor 148 is a pilot contact for communication between the vehicle and the charger to facilitate control of the charging process. The vertically offset charging conductors as described above ensure connection of the conductors in the correct order according to IEC61851.

Preferably, the charging conductors 142, 144, 146, 148 have a contact width of around 50mm. Also, they may have the ability to rock or tilt slightly from side-to-side, in a similar manner to the charge receiving conductors 12, 14, 16, 18 on pivoting mounts.

The spacing between the charging conductors 142, 144, 146, 148 is around 500mm. This ensures that the charge receiving connector can be mounted to most commercial vehicles, and yet maintains a good side-to-side docking tolerance of around 375 - 430 mm. The length of each charging conductor is around 1000mm, which again gives a reasonable front-to-back docking tolerance whilst ensuring that the charge receiving connector can be mounted to most types of vehicle. Preferably, the charge receiving connector will always be at the highest point on the vehicle roof, but as long as it is the highest point in its approximately 1000mm long section of roof, then the system will work. Therefore, the charge receiving connector may be fitted to, for example, a refuse lorry, even where the refuse collection and/or compaction plant extends above the height of the charge receiving connector.

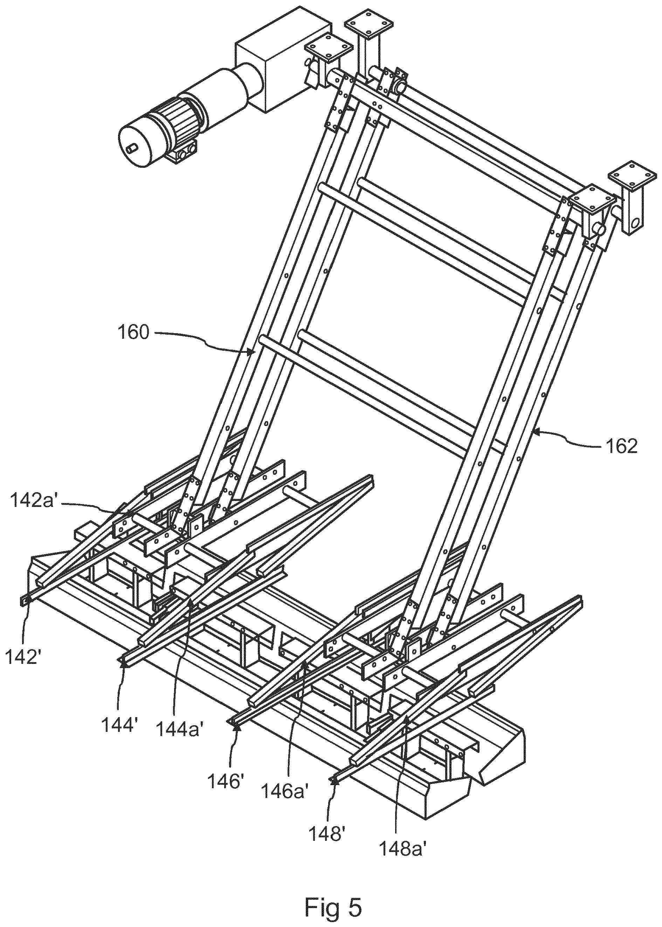

Referring now to Figure 5, an alternative arrangement of charging conductors 142', 144', 146', 148' is shown. In this arrangement, the charging conductors 142', 144', 146', 148' do not move on pantographs, but are each mounted to spring-loaded pivoting frames 142a', 144a', 146a', 148a', which is turn are mounted on pivoting arms 160, 162. This arrangement has the advantage that its vertical height is very small when folded.

In a typical embodiment which is suitable for multiple types of vehicle, the charging conductors can be lowered to any height between 4.3 meters and 3.0 meters above the road. With the conductors raised, the clearance is greater than 4.5 meters.

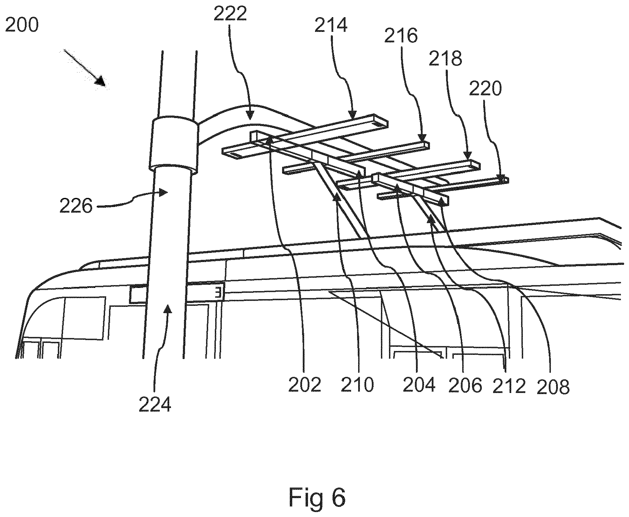

Referring now to Figure 6, an alternative embodiment of a charging arrangement is indicated generally at 200. In this arrangement, four charge receiving conductors 202, 204, 206, 208 are provided, two charge receiving conductors on either side of each of two movable arms 210, 212. Although in this arrangement the charge receiving conductors move significantly, the arrangement of charge receiving conductors all on the same line still provides for a reasonably compact charge receiving connector, which does not require excessive roof-space on the vehicle. Charging conductors 214, 216, 218, 220 are provided, running parallel with each other and on a horizontal section 222 of a charging gantry 224, the horizontal section being movable vertically with respect to a substantially vertical stanchion 226.

The charging arrangement described provides for lower cost, smaller footprint and less weight on the vehicle. Because the charge receiving connector has no or very limited mechanical moving parts, the probability of failure is reduced. The charge receiving connector can be fitted to many types of vehicles, including vehicles which have limited roof space. The vertical stanchion of the charging gantry can incorporate various different designs to better blend in with the streetscape in particular installations, and the relatively low moving mass of the charging conductors provides increased safety when installing and servicing the charging gantry. The tilting conductors on the charge receiving connector provide the advantages of vehicle-mounted pantographs in terms of tolerating uneven or sloping road surfaces, but without the drawbacks of increased cost, weight, and likelihood of failure.

The embodiments described above are provided by way of example only, and various changes and modifications will be apparent to persons skilled in the art without departing from the scope of the present invention as defined by the appended claims.

## Claims

1. A charging arrangement for a vehicle, the charging arrangement comprising:
• a charge receiving connector (10) secured to the roof of a vehicle, the charge receiving connector (10) including at least four elongate charge receiving conductors (12, 14, 16, 18), longitudinal axes of the charge receiving conductors (12, 14, 16, 18) being disposed substantially along the same line; and
• a charging gantry including at least four charging conductors (142, 144, 146, 148), the charging conductors (142, 144, 146, 148) being vertically movable between a raised position in which the charging conductors (142, 144, 146, 148) are clear of the vehicle when the vehicle is under the charging gantry, and a lowered position in which the charging conductors (142, 144, 146, 148) make contact with the charge receiving conductors (12, 14, 16, 18) on the roof of the vehicle, in which each charging conductor (142, 144, 146, 148) on the charging gantry is independently movable, and/or the charging conductors (142, 144, 146, 148) in the raised position are vertically offset from each other.

2. A charging arrangement as claimed in claim 1, in which the charge receiving connector (10) is secured to the roof of the vehicle substantially at a fixed height from the roof of the vehicle.

3. A charging arrangement as claimed in claim 1, in which the charge receiving connector (10) is vertically movable, optionally to an extent which is significantly less than the movement of the charging conductors (142, 144, 146, 148) from a raised position to a lowered position.

4. A charging arrangement as claimed in any preceding claim, in which a cover (30) is included for covering the charge receiving connector (10).

5. A charging arrangement as claimed in claim 4, in which the cover is formed in two elongate parts, the parts being movable outwardly to either side of the charge receiving conductors to open the cover, and being movable inwardly, towards one another, to close the cover.

6. A charging arrangement as claimed in any preceding claim, in which at least two of the charge receiving conductors (12, 14, 16, 18) are provided on tilting mounts (20, 22, 24, 26).

7. A charging arrangement as claimed in any preceding claim, in which each charge receiving conductor (12, 14, 16, 18) is provided on an independent tilting mount (20, 22, 24, 26).

8. A charging arrangement as claimed in claim 7, in which the tilting mount(s) (20, 22, 24, 26) allow tilting of each charge receiving conductor (12, 14, 16, 18) in a direction substantially perpendicular to the elongate extent of the charge receiving conductor (12, 14, 16, 18).

9. A charging arrangement as claimed in any of the preceding claims, in which at least two of the charge receiving conductors (12, 14, 16, 18) include a substantially planar contact surface (12a, 14a, 16a, 18a).

10. A charging arrangement as claimed in claim 9, in which the third charge receiving conductor has a curved contact area.

11. A charging arrangement as claimed in any of the preceding claims, in which insulating spacers (28) are provided on ends of the charge receiving conductors (12, 14, 16, 18).

12. A charging arrangement as claimed in any of the preceding claims, in which the charging conductors (142, 144, 146, 148) on the gantry are elongate, and are arranged to be substantially parallel with each other.

13. A charging arrangement as claimed in any preceding claim, in which each charging conductor (142, 144, 146, 148) on the charging gantry is arranged to contact an associated charge-receiving conductor (12, 14, 16, 18) with a predetermined contact force.

## Patentansprüche

1. Ladeeinrichtung für ein Fahrzeug, wobei die Ladeeinrichtung umfasst:
- einen ladungsaufnehmenden Verbinder (10), der am Dach eines Fahrzeugs gesichert ist, wobei der ladungsaufnehmende Verbinder (10) mindestens vier längliche ladungsaufnehmende Leiter (12, 14, 16, 18) einschließt, wobei Längsachsen der ladungsaufnehmenden Leiter (12, 14, 16, 18) im Wesentlichen entlang derselben Linie angeordnet sind; und
- ein Ladeportal, das mindestens vier Ladeleiter (142, 144, 146, 148) einschließt, wobei die Ladeleiter (142, 144, 146, 148) vertikal zwischen einer angehobenen Stellung, in der die Ladeleiter (142, 144, 146, 148) vom Fahrzeug beabstandet sind, wenn sich das Fahrzeug unter dem Ladeportal befindet, und einer abgesenkten Stellung bewegt werden können, in der die Ladeleiter (142, 144, 146, 148) Kontakt zu den ladungsaufnehmenden Leitern (12, 14, 16, 18) auf dem Dach des Fahrzeugs herstellen, wobei jeder Ladeleiter (142, 144, 146, 148) am Ladeportal unabhängig bewegt werden kann, und/oder die Ladeleiter (142, 144, 146, 148) in der angehobenen Stellung vertikal zueinander versetzt sind.

2. Ladeeinrichtung nach Anspruch 1, wobei der ladungsaufnehmende Verbinder (10) im Wesentlichen auf einer festen Höhe vom Dach des Fahrzeugs am Dach des Fahrzeugs gesichert ist.

3. Ladeeinrichtung nach Anspruch 1, wobei der ladungsaufnehmende Verbinder (10) vertikal bewegt werden kann, gegebenenfalls um eine Erstreckung, die erheblich kleiner ist als die Bewegung der Ladeleiter (142, 144, 146, 148) von einer angehobenen Stellung zu einer abgesenkten Stellung.

4. Ladeeinrichtung nach einem der vorstehenden Ansprüche, wobei eine Abdeckung (30) zum Abdecken des ladungsaufnehmenden Verbinders (10) eingeschlossen ist.

5. Ladeeinrichtung nach Anspruch 4, wobei die Abdeckung in zwei länglichen Teilen gebildet ist, wobei die Teile zu beiden Seiten der ladungsaufnehmenden Leiter nach außen bewegt werden können, um die Abdeckung zu öffnen, und nach innen aufeinander zu bewegt werden können, um die Abdeckung zu schließen.

6. Ladeeinrichtung nach einem der vorstehenden Ansprüche, wobei mindestens zwei der ladungsaufnehmenden Leiter (12, 14, 16, 18) auf neigbaren Halterungen (20, 22, 24, 26) angeordnet sind.

7. Ladeeinrichtung nach einem vorstehenden Anspruch, wobei jeder ladungsaufnehmende Leiter (12, 14, 16, 18) auf einer unabhängigen neigbaren Halterung (20, 22, 24, 26) angeordnet ist.

8. Ladeeinrichtung nach Anspruch 7, wobei die neigbare(n) Halterung(en) (20, 22, 24, 26) das Neigen jedes ladungsaufnehmenden Leiters (12, 14, 16, 18) in einer Richtung im Wesentlichen senkrecht zur länglichen Erstreckung des ladungsaufnehmenden Leiters (12, 14, 16, 18) ermöglichen.

9. Ladeeinrichtung nach einem der vorstehenden Ansprüche, wobei mindestens zwei der ladungsaufnehmenden Leiter (12, 14, 16, 18) eine im Wesentlichen planare Kontaktfläche (12a, 14a, 16a, 18a) einschließen.

10. Ladeeinrichtung nach Anspruch 9, wobei der dritte ladungsaufnehmende Leiter eine gekrümmte Kontaktfläche aufweist.

11. Ladeeinrichtung nach einem der vorstehenden Ansprüche, wobei an Enden der ladungsaufnehmenden Leiter (12, 14, 16, 18) isolierende Abstandshalter (28) angeordnet sind.

12. Ladeeinrichtung nach einem der vorstehenden Ansprüche, wobei die Ladeleiter (142, 144, 146, 148) am Portal länglich sind, und so eingerichtet sind, dass sie im Wesentlichen parallel zueinander sind.

13. Ladeeinrichtung nach einem der vorstehenden Ansprüche, wobei jeder Ladeleiter (142, 144, 146, 148) am Ladeportal so eingerichtet ist, dass er einen zugehörigen ladungsaufnehmenden Leiter (12, 14, 16, 18) mit einer vorbestimmten Kontaktkraft kontaktiert.

## Revendications

1. Agencement de recharge pour un véhicule, l'agencement de recharge comprenant :
• un connecteur de réception de recharge (10) arrimé au toit d'un véhicule, le connecteur de réception de recharge (10) comprenant au moins quatre conducteurs de réception de recharge allongés (12, 14, 16, 18), des axes longitudinaux des conducteurs de réception de recharge (12, 14, 16, 18) étant disposés sensiblement le long de la même ligne ; et
• un portique de recharge comprenant au moins quatre conducteurs de recharge (142, 144, 146, 148), les conducteurs de recharge (142, 144, 146, 148) étant mobiles verticalement entre une position relevée dans laquelle les conducteurs de recharge (142, 144, 146, 148) sont à l'écart du véhicule lorsque le véhicule est sous le portique de recharge, et une position abaissée dans laquelle les conducteurs de recharge (142, 144, 146, 148) établissent un contact avec les conducteurs de réception de recharge (12, 14, 16, 18) sur le toit du véhicule, dans lequel chaque conducteur de recharge (142, 144, 146, 148) sur le portique de recharge est mobile indépendamment, et/ou les conducteurs de recharge (142, 144, 146, 148) dans la position relevée sont décalés verticalement les uns des autres.

2. Agencement de recharge selon la revendication 1, dans lequel le connecteur de réception de recharge (10) est arrimé au toit du véhicule sensiblement à une hauteur fixe à partir du toit du véhicule.

3. Agencement de recharge selon la revendication 1, dans lequel le connecteur de réception de recharge (10) est mobile verticalement, facultativement à un degré qui est inférieur de façon significative au déplacement des conducteurs de recharge (142, 144, 146, 148) d'une position relevée à une position abaissée.

4. Agencement de recharge selon l'une quelconque des revendications précédentes, dans lequel un couvercle (30) est inclus pour couvrir le connecteur de réception de recharge (10).

5. Agencement de recharge selon la revendication 4, dans lequel le couvercle est formé en deux parties allongées, les parties étant mobiles vers l'extérieur de chaque côté des conducteurs de réception de recharge pour ouvrir le couvercle, et étant mobiles vers l'intérieur, l'une vers l'autre, pour fermer le couvercle.

6. Agencement de recharge selon l'une quelconque des revendications précédentes, dans lequel au moins deux des conducteurs de réception de recharge (12, 14, 16, 18) sont disposés sur des bâtis d'inclinaison (20, 22, 24, 26).

7. Agencement de recharge selon l'une quelconque des revendications précédentes, dans lequel chaque conducteur de réception de recharge (12, 14, 16, 18) est disposé sur un bâti d'inclinaison (20, 22, 24, 26) indépendant.

8. Agencement de recharge selon la revendication 7, dans lequel le ou les bâtis d'inclinaison (20, 22, 24, 26) permettent une inclinaison de chaque conducteur de réception de recharge (12, 14, 16, 18) dans une direction sensiblement perpendiculaire au degré d'allongement du conducteur de réception de recharge (12, 14, 16, 18).

9. Agencement de recharge selon l'une quelconque des revendications précédentes, dans lequel au moins deux des conducteurs de réception de recharge (12, 14, 16, 18) comportent une surface de contact sensiblement plane (12a, 14a, 16a, 18a).

10. Agencement de recharge selon la revendication 9, dans lequel le troisième conducteur de réception de recharge présente une zone de contact incurvée.

11. Agencement de recharge selon l'une quelconque des revendications précédentes, dans lequel des entretoises isolantes (28) sont disposées sur des extrémités des conducteurs de réception de recharge (12, 14, 16, 18).

12. Agencement de recharge selon l'une quelconque des revendications précédentes, dans lequel les conducteurs de recharge (142, 144, 146, 148) sur le portique sont allongés, et sont agencés pour être sensiblement parallèles les uns aux autres.

13. Agencement de recharge selon l'une quelconque des revendications précédentes, dans lequel chaque conducteur de recharge (142, 144, 146, 148) sur le portique de recharge est agencé pour entrer en contact avec un conducteur de réception de recharge (12, 14, 16, 18) associé, avec une force de contact prédéterminée.
